# EUROPÄISCHE PATENTSCHRIFT

(11) **EP 3 282 519 B1**
(45) Veröffentlichungstag und Bekanntmachung des Hinweises auf die Patenterteilung: **19.05.2021**
(21) Anmeldenummer: 16001756.2
(22) Anmeldetag: 08.08.2016
(51) Int. Cl.: H01R 9/24, H01R 31/00

(54) **MODULARER VERTEILER FÜR ELEKTRISCHE LEITUNGEN**
MODULAR DISTRIBUTION FOR ELECTRICAL LINES
REPARTITEUR MODULAIRE POUR DES CONDUITES ELECTRIQUES

(43) Veröffentlichungstag der Anmeldung: 14.02.2018
(73) Patentinhaber: Murrelektronik GmbH, 71570 Oppenweiler (DE)
(72) Erfinder: Dietrich, Michael, 74535 Mainhardt (DE); Ulrich, Thomas, 71549 Auenwald (DE)
(74) Vertreter: Wasmuth, Rolf

(56) Entgegenhaltungen:
- WO-A1-02/28159
- DE-U1-202004 003 118
- US-A- 3 016 512
- US-A- 4 520 427
- US-B1- 9 124 056

## Beschreibung

Die Erfindung betrifft einen modularen Verteiler für zugehende und abgehende elektrische Leitungen.

Ein bekannter Verteiler besteht aus einem Basismodul mit einer ersten elektrischen Leitung als Zuleitung und einem Anschlussmodul mit einer zweiten elektrischen Leitung als Ableitung. Zumindest eine erste Ader der ersten elektrischen Leitung ist mit einer zweiten Ader der zweiten elektrischen Leitung kontaktiert, meist über eine Kontaktklemme elektrisch verbunden.

Wird bei Fertigungsanlagen eine Vielzahl von Aktoren, Sensoren oder dgl. Elemente an einer zentralen Steuerung angeschlossen, ist dies mit großem Installationsaufwand verbunden. Oft werden Verteilerkästen eingesetzt, in denen die Adern von zuführenden Leitungen mit den Adern von abführenden Leitungen über Kontaktklemmen verbunden werden.

Es sind auch vorkonfektionierte Verteiler bekannt, die z. B. Rundsteckerbuchsen aufweisen. Die anzuschließenden aktiven oder passiven Elemente werden mit vorkonfektionierten Leitungen über Rundstecker angeschlossen. Nicht benutzte Buchsen des Verteilers bleiben frei, insbesondere wenn an einem Anschlussort Verbindungen unterschiedlicher Art vorzusehen sind.

Aus der US 9,124,056 B1 ist ein Verteiler mit einer zentralen Zuführung bekannt, auf der die Anschlussmodule aufgesetzt werden. Dabei weist ein Anschlussmodul eine manuell zu schließende Klammer auf, die im geschlossenen Zustand über drei Kontaktzungen die drei Erhebungen der Leiter des zentralen Stabes kontaktieren. Um die Anschlussmodule an den Kontaktstangen festzulegen, ist Werkzeug und zusätzliche Montagearbeit notwendig.

Aus der US 3,016,512 A ist eine Steckeranordnung bekannt, bei welcher Plattenmodule mit mehreren Öffnungen versehen auf entsprechende Kontaktstifte aufsteckbar sind. In den Plattenmodulen sind Klemmelemente eingeklemmt, wobei die Klemmelemente Teil einer Anschlussleitung sind. Die Klemmelemente kontaktieren die Kontaktstifte.

Der Erfindung liegt die Aufgabe zugrunde, einen modularen Verteiler für zugehende und abgehende elektrische Leitungen zu schaffen, der eine hohe Variabilität aufweist und einfach zu verdrahten ist.

Die Aufgabe wird erfindungsgemäß nach den Merkmalen des Anspruchs 1 gelöst.

Am Basismodul sind zumindest zwei Kontaktstangen gehalten, wobei ein Anschlussmodul mechanisch auf die Kontaktstangen aufgeschoben wird. Die Kontaktstangen durchragen das Anschlussmodul, wobei eine Kontaktstange als elektrische Verbindung zwischen einer ersten Ader einer ersten Leitung und einer zweiten Ader einer zweiten Leitung dient. Die Kontaktstangen bilden somit nicht nur eine elektrische Verbindung zwischen den zu verdrahtenden Leitungen, sondern zugleich auch ein mechanisches Gerüst zur Verbindung eines oder mehrerer Anschlussmodule mit dem Basismodul.

Ein Anschlussmodul weist ein Gehäuse mit einer Führungshülse auf, die vorteilhaft einteilig mit dem Gehäuse ausgebildet ist; z. B. können das Gehäuse und die Führungshülse aus Kunststoff einteilig gespritzt sein. Die Führungshülse wird nach dem Aufschieben des Anschlussmoduls auf die Kontaktstange auf zumindest einer der Kontaktstangen axial verschiebbar gehalten und gewährleistet so ein einfaches Auffädeln der Anschlussmodule auf die Kontaktstangen. Bevorzugt ist das Anschlussmodul auf allen Kontaktstangen des Basismoduls mechanisch geführt und gehalten.

Eine Führungshülse des Gehäuses ist zugleich als elektrische Kontaktklemme ausgebildet. Zweckmäßig sind die Führungshülsen mit einer elektrischen Kontaktklemme versehen, welche auf den Kontaktstangen geführt sind, die die Versorgungsspannung leiten.

Insbesondere wenn eine Vielzahl von Kontaktstangen am Basismodul vorgesehen sind, kann der modulare Verteiler derart ausgelegt werden, dass für jedes Anschlussmodul bestimmte Kontaktstangen die elektrische Verbindung zwischen den Adern einer zuführenden Leitung und den Adern einer abführenden Leitung des Anschlussmoduls herstellen.

Die Anschlussmodule werden zweckmäßig auf zumindest einer der Kontaktstangen mechanisch geführt, so dass eine mechanische Ausrichtung eines Anschlussmoduls relativ zum Basismodul gewährleistet ist.

Eine Kontaktstange kann mehrere Anschlussmodule durchragen, so dass z. B. eine Kontaktstange ein oder zwei Module durchragt und erst in einem dritten Anschlussmodul mit der Ader einer abführenden Leitung kontaktiert wird.

Das Gehäuse des Anschlussmoduls ist in vorteilhafter Weiterbildung der Erfindung als Gehäusetopf mit einem Boden ausgebildet, wobei der elektrische Kontakt einer Ader der elektrischen Leitung des Anschlussmoduls mit einer Kontaktstange innerhalb des Gehäusetopfes liegt. Da der Gehäusetopf nach oben offen ist, ist eine einfache Montage gewährleistet. Die Kontaktstangen, die anzubringenden Kontakte und die Führungshülsen sind von oben frei zugänglich.

Der Gehäusetopf des Anschlussmoduls wird vorteilhaft durch ein auf der Kontaktstange folgendes, benachbartes Anschlussmodul verschlossen. Der Anschlussraum eines Anschlussmoduls ist dabei insbesondere durch einen Boden eines auf der Kontaktstange folgenden, benachbarten Anschlussmoduls verschlossen und kann - bei entsprechender Auslegung - hohe Schutzklassen bis über IP65 hinaus erreichen.

Zur Erzielung einer höchsten Schutzklasse IP67 bis zu IP69K wird zwischen einem Anschlussmodul und einem auf der Kontaktstange folgenden, benachbarten Anschlussmodul eine Dichtung angeordnet. Die Dichtung ist so vorgesehen, dass sie eine axiale Abdichtung in Hochrichtung des Verteilers gewährleistet. Optional kann vorgesehen sein, die Dichtung derartig auszubilden, dass sie durch Anlage an der Innenwand des Aufnahmeraums eines Aufnahmemoduls auch eine radiale Abdichtung zwischen benachbarten Anschlussmodulen herstellt.

In Weiterbildung der Erfindung weist das Gehäuse des Anschlussmoduls in zumindest einer Gehäuseseite ein Aufnahmefenster zur Aufnahme eines Anschlusselementes auf, wobei das Anschlusselement - vorzugsweise im Produktionsprozess - montiert ist. Ein Anschlussmodul weist eine Anschlussleitung, eine Verschraubung für eine Anschlussleitung und/oder eine Steckverbindung für eine Anschlussleitung auf. Die Module können in einer anderen Ausgestaltung der Erfindung so ausgebildet sein, dass ein Aufnahmefenster für ein Anschlusselement als Ausbruchfläche gestaltet ist, so dass ein Benutzer vor Ort die Lage des Aufhahmefensters und die Anzahl der zu öffnenden Aufnahmefenster bestimmen kann.

Die elektrische Verbindung zwischen einer Ader der elektrischen Leitung des Anschlussmoduls und einer der Kontaktstangen des Basismoduls ist vorteilhaft als federnde Kontaktklemme ausgebildet. Die Gestaltung der federnden Kontaktklemme ist so vorgesehen, dass sie axial verschiebbar auf der Kontaktstange gehalten ist. In besonderer Weise ist die Kontaktklemme als Käfigfederzugklemme ausgebildet, die von einer Kontaktstange durchragt ist.

In der Erfindung sind die Kontaktstangen auf einem Boden des Basismoduls gehalten, wobei die Adern der ersten Leitung, z. B. einer zuführenden Leitung, unterhalb des Bodens elektrisch angeschlossen sind. Zweckmäßig ist hierzu eine Anschlussplatine vorgesehen, auf der die Enden der Kontaktstangen elektrisch kontaktiert sind.

Das Basismodul weist eine Zentralachse auf, um die die Kontaktstangen angeordnet sind. Die Anordnung ist so getroffen, dass auf dem Boden des Basismoduls mehrere äußere Kontaktstangen mit einem äußeren Radialabstand zur Zentralachse vorgesehen sind. Ferner sind mehrere innere Kontaktstangen mit einem inneren Radialabstand zur Zentralachse angeordnet. Dabei ist der Radialabstand so gewählt, dass der innere Radialabstand kleiner ist als der äußere Radialabstand.

Die Anordnung der Kontaktstangen ist ferner derart gestaltet, dass das Anschlussmodul jeweils um 90° gedreht lagerichtig auf die Kontaktstangen aufgefädelt werden kann. Die Ausgestaltung ist vorteilhaft so getroffen, dass eine Drehsymmetrie um jeweils 90° Drehwinkel gegeben ist. Ein Anschlussmodul kann somit in vier Drehlagen jeweils lagerichtig auf das Basismodul aufgesetzt werden.

Vorzugsweise liegen alle inneren Kontaktstangen mit einem gleichen inneren Radialabstand zur Zentralachse und alle äußeren Kontaktstangen mit einem gleichen äußeren Radialabstand zur Zentralachse. Die Längsachsen der inneren oder der äußeren Kontaktstangen liegen dabei zweckmäßig auf einem gemeinsamen Durchmesserkreis.

Die äußeren Kontaktstangen bilden elektrische Versorgungsleitungen und sind im Durchmesser stärker ausgebildet als die inneren Kontaktstangen, die als elektrische Signalleitungen genutzt sind.

Die Kontaktstangen bestehen zweckmäßig aus einem elektrisch leitfähigen Material; es kann ausreichend sein, die Kontaktstangen mit einer äußeren, leitfähigen Ummantelung zu versehen.

Um eine Kontaktierung einer Kontaktstange durch eine aufgeschobene Kontaktklemme sichtbar zu machen, kann es vorteilhaft sein, die Kontaktstangen mit einem - insbesondere farbigen - Kontaktlack zu überziehen. Beim Aufschieben einer Kontaktklemme wird dieser Lack abgeschält, so dass der Benutzer bei Aufschieben z. B. eines dritten Anschlussmoduls anhand des optischen Zustands der Kontaktstangen erkennen kann, welche der Kontaktstangen bereits kontaktiert ist und welche nicht.

Es ist vorgesehen, dass der modulare Verteiler für zugehende und abgehende elektrische Leitungen aus zumindest einem Basismodul mit einer ersten elektrischen Leitung und einem Anschlussmodul mit einer zweiten elektrischen Leitung derart gestaltet, dass zumindest eine erste Ader der ersten elektrischen Leitung mit einer zweiten Ader der zweiten elektrischen Leitung kontaktiert ist. Am Basismodul sind zumindest zwei Kontaktstangen gehalten, wobei die Kontaktstangen vorzugsweise auf einem Boden des Basismoduls gehalten und bevorzugt die Adern der ersten Leitung unterhalb des Bodens über eine Anschlussplatine an die Enden der Kontaktstangen elektrisch angeschlossen sind. Das Basismodul weist eine Zentralachse auf, wobei vorteilhaft auf dem Boden des Basismoduls mehrere äußere Kontaktstangen mit einem äußeren Radialabstand zur Zentralachse und mehrere innere Kontaktstangen mit einem inneren Radialabstand zur Zentralachse gehalten sind. Vorzugsweise ist der innere Radialabstand kleiner als der äußere Radialabstand, wobei bevorzugt das Anschlussmodul auf die Kontaktstangen aufgeschoben ist und die Kontaktstangen das Anschlussmodul durchragen. Eine Kontaktstange bildet die elektrische Verbindung zwischen einer ersten Ader der ersten Leitung und einer zweiten Ader der zweiten Leitung.

Die elektrische Kontaktierung erfolgt vorzugsweise durch das Aufschieben auf die Kontaktstangen.

Die Querschnittsform der Kontaktstangen ist vorzugsweise zylindrisch; andere Querschnittsformen wie quadratisch, sechseckig oder dgl. können vorteilhaft sein.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: eine perspektivische Ansicht eines Verteilers in Form eines Towers mit mehreren Zuleitungen und Ableitungen,
- Fig. 2: eine perspektivische Ansicht eines Basismoduls des Verteilers nach Fig. 1,
- Fig. 3: in vergrößerter Darstellung den Fuß des Basismoduls mit am Modul fest-gelegten Kontaktstangen,
- Fig. 4: eine perspektivische Ansicht eines Basismoduls mit Kontaktstangen und einem darauf aufgefädelten Anschlussmodul in einer Zwischenlage,
- Fig. 5: eine schematische Darstellung des Verteilers nach Fig. 1 aus Basismodul, Anschlussmodulen und Zuleitungen sowie Ableitungen,
- Fig. 6: in perspektivischer Darstellung das Gehäuse eines Anschlussmoduls,
- Fig. 7: in perspektivischer Darstellung ein Deckelmodul des Verteilers nach Fig. 1,
- Fig. 8: in perspektivischer Darstellung ein Fußmodul des Verteilers nach Fig. 1,
- Fig. 9: ein Anschlusselement mit einer umspritzten Leitung,
- Fig. 10: in perspektivischer Darstellung ein Anschlusselement mit einer Kabelverschraubung,
- Fig. 11: ein Anschlusselement mit einem Rundsteckverbinder,
- Fig. 12: in perspektivischer Darstellung ein Anschlusselement als Super Seal-Steckverbindung,
- Fig. 13: in perspektivischer Darstellung eine Deutsch-Steckverbindung,
- Fig. 14: in perspektivischer Darstellung eine federnde Kontaktklemme mit Crimpanschluss zur Verbindung mit einer Leitungsader,
- Fig. 15: in perspektivischer Darstellung eine Kontaktklemme mit einem Federkontakt zur Verbindung mit einer Leitungsader,
- Fig. 16: eine perspektivische Ansicht eines Verteilers in Form eines liegenden Towers mit optionalen Befestigungsflanschen.

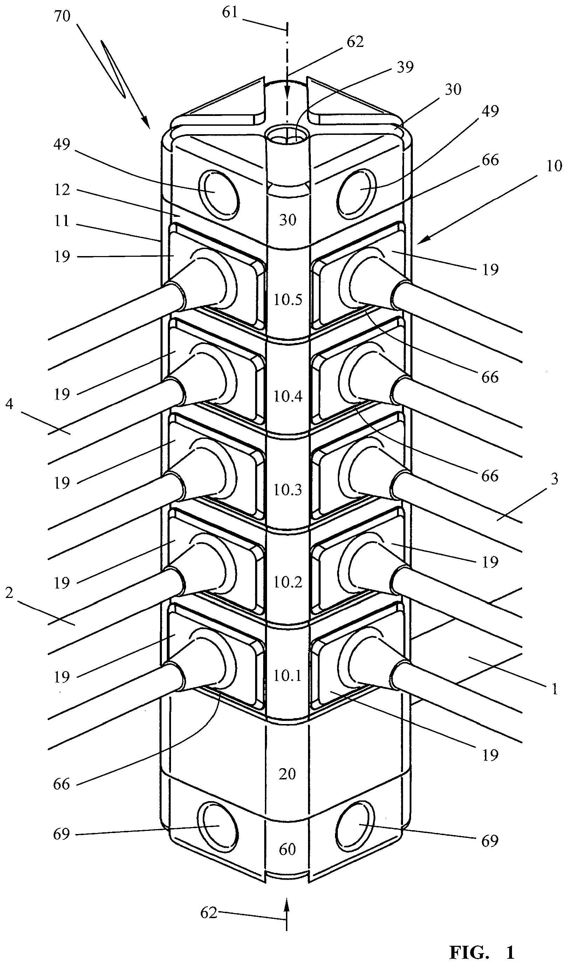

Der in Fig. 1 dargestellte Verteiler 70 besteht im Wesentlichen aus einem Basismodul 20 mit einem oder mehreren auf das Basismodul 20 aufgesetzten Anschlussmodulen 10. Im gezeigten Ausführungsbeispiel sind auf das Basismodul 20 fünf Anschlussmodule 10.1, 10.2, 10.3, 10.4 und 10.5 aufgesetzt. Das in der Reihe letzte Anschlussmodul 10.5 trägt ein Deckelmodul 30 als Abschluss. Das Basismodul 20 ist zweckmäßig auf einem Fußmodul 60 gehalten. Zur Fixierung der einzelnen Anschlussmodule 10 relativ zueinander und zum Basismodul kann der Verteiler von einer Zugstange 61 durchragt sein; die Zugstange 61 kann als Gewindestange, Zugbolzen oder dgl. ausgebildet sein. Die Zugstange 61 leitet in die übereinander gestapelten Anschlussmodule 10.1, 10.2, 10.3, 10.4 und 10.5, das Basismodul 20 und das Deckelmodul 30 eine Kraft in Richtung der Pfeile 62 und 63 ein, wodurch die Module axial fest aufeinander gepresst werden.

Wie nachfolgend noch beschrieben wird, sind zwischen den Modulen Dichtungen 66 angeordnet, wodurch ein staub- und flüssigkeitsdichter Verbund geschaffen ist. Der erfindungsgemäße Verteiler kann Schutzklassen bis IP65, IP68 oder gar IP69K erreichen.

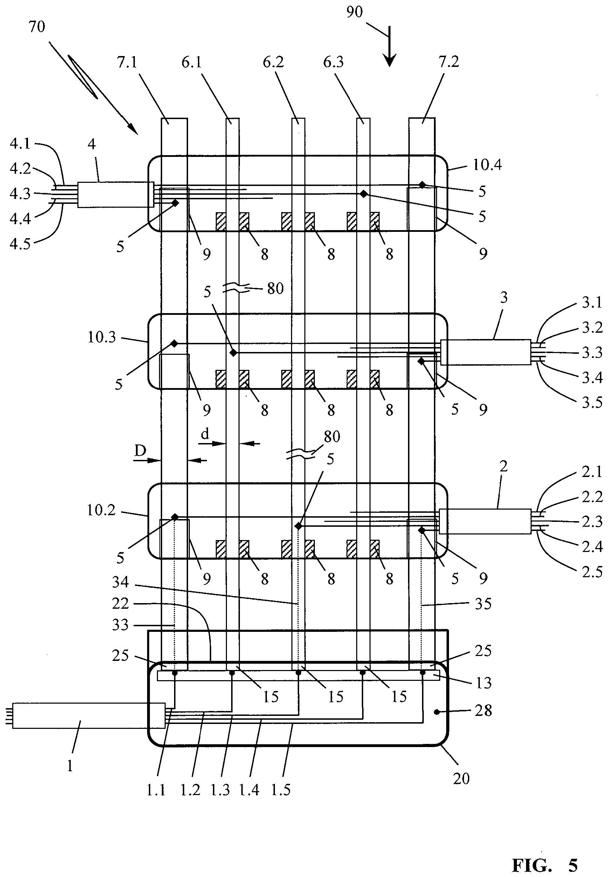

Der Verteiler 70 weist eine zugehende Leitung als erste elektrische Leitung 1 und zumindest eine abgehende Leitung als zweite elektrische Leitung 2 auf. Wie Fig. 1 zeigt, kann ein einzelnes Anschlussmodul mehr als eine zugehende bzw. abgehende elektrische Leitung aufweisen; beispielhaft sind in der schematischen Darstellung in Fig. 5 das Anschlussmodul 10.2 mit einer abgehenden Leitung 2, das Anschlussmodul 10.3 mit einer Leitung 3 und das Anschlussmodul 10.4 mit einer Leitung 4 dargestellt.

Ein Gehäuse 11 eines Anschlussmoduls 10 kann auf jeder seiner Gehäuseseiten 12 mit einer zugehenden Leitung oder einer abgehenden Leitung versehen sein. Im gezeigten Ausführungsbeispiel sind an einem Anschlussmodul 10 bis zu vier zugehende/abgehende elektrische Leitungen an den Verteiler 70 anschließbar. Bei dem Verteiler 70 nach Fig. 1 sind fünf Anschlussmodule 10.1 bis 10.5 vorgesehen, so dass z. B. maximal zwanzig zugehende und abgehende Leitungen 2, 3, 4 an eine zuführende Stammleitung, die Leitung 1, angeschlossen werden können. Die Anzahl der Anschlussmodule eines Towers kann vom Einsatzort und der gewünschten Anzahl von elektrischen Anschlüssen abhängig gewählt werden. Die im Ausführungsbeispiel gezeigte Anzahl von fünf Anschlussmodulen 10.1 bis 10.5 für einen Tower ist beispielhaft dargestellt. Es können auch weniger als fünf Anschlussmodule oder mehr als fünf, z.B. acht oder mehr Anschlussmodule vorgesehen sein.

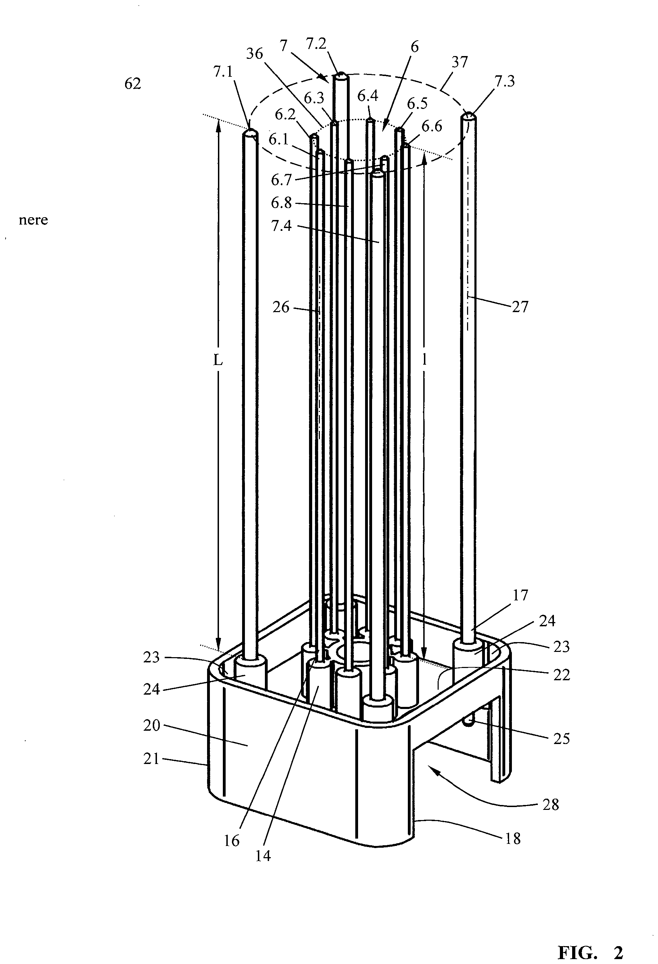

Das Basismodul 20 ist in Fig. 2 dargestellt und besteht im Wesentlichen aus einem Grundgehäuse 21 mit einem Boden 22, auf dem mehrere Kontaktstangen 6 bzw. 7 gehalten sind. Im gezeigten Ausführungsbeispiel sind vier äußere Kontaktstangen 7.1, 7.2, 7.3, 7.4 und acht innere Kontaktstangen 6.1, 6.2, 6.3, 6.4, 6.5, 6.6, 6.7, 6.8 vorgesehen. Wie Fig. 2 zeigt, liegen die Kontaktstangen 6, 7 mit ihren Längsachsen 26, 27 lotrecht zum Boden 22 des Grundgehäuses 21. In Draufsicht hat das Grundgehäuse 21 eine etwa quadratische Grundform, bevorzugt eine genau quadratische Grundform. In jeder Gehäuseecke 23 des Grundgehäuses 21 ist ein Haltedom 24 angeordnet. Die dem Basismodul 20 zugewandten Endabschnitte 17 der Kontaktstangen 7 sind in den Haltedomen 24 fixiert und unverlierbar gehalten. Wie Fig. 2 zeigt, durchragt ein Endabschnitt 17 einer Kontaktstange 7 den Boden 22 und endet mit einem Ende 25 in einem Anschlussraum 28 des Basismoduls 20.

Die Kontaktstangen 6 liegen mit ihren Endabschnitten 16 in Haltedomen 14, die im Grundgehäuse 21 des Basismoduls 20 ausgebildet sind. Die Endabschnitte 16 durchragen - wie die Endabschnitte 17 der Kontaktstangen 7 - den Boden 22 des Basismoduls 20 und enden mit ihren Enden 15 (Fig. 5) innerhalb des Anschlussraums 28 des Grundgehäuses 21 des Basismoduls 20.

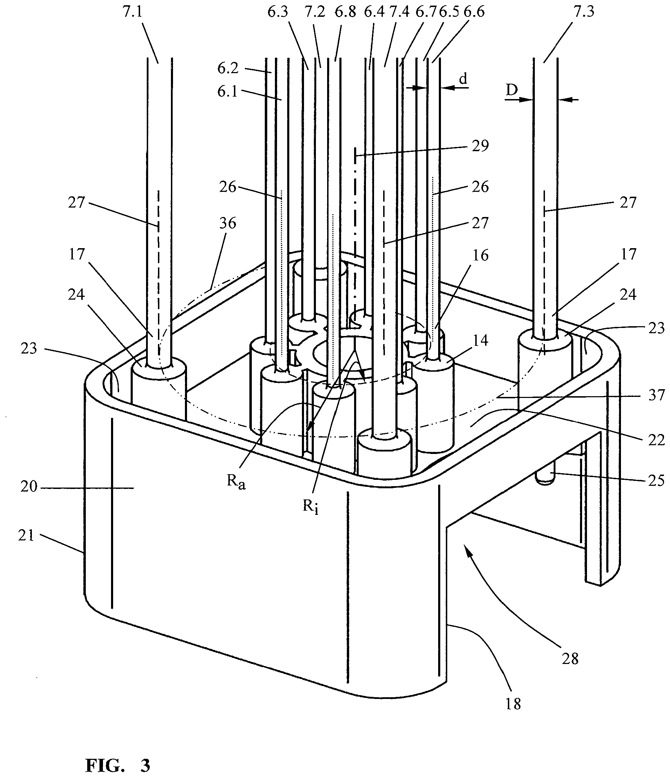

In Fig. 2 wird deutlich, dass die Kontaktstangen 6.1, 6.2, 6.3, 6.4, 6.5, 6.6, 6.7, 6.8 eine gleiche axiale Länge 1 und die Kontaktstangen 7.1, 7.2, 7.3, 7.4 eine gleiche axiale Länge L aufweisen. Es kann zweckmäßig sein, die äußeren Kontaktstangen 7.1, 7.2, 7.3, 7.4 mit einer größeren Länge L auszuführen. Dadurch kann das Auffädeln eines Anschlussmoduls 10 auf die Kontaktstangen erleichtert werden. Die im Zentrum angeordneten Kontaktstangen 6.1, 6.2, 6.3, 6.4, 6.5, 6.6, 6.7, 6.8 haben vorteilhaft einen kleineren Durchmesser d wie die in den Gehäuseecken 23 des Basismoduls 20 angeordneten äußeren Kontaktstangen 7.1, 7.2, 7.3, 7.4. Dies ist insbesondere in Fig. 3 dargestellt.

Fig. 3 zeigt eine Zentralachse 29 des Basismoduls 20; die Zentralachse 29 liegt parallel zu den Längsachsen 26 und 27 der Kontaktstangen 6 und 7.

Wie die Figuren 2 und 3 zeigen, liegen die in den Gehäuseecken 23 angeordneten Kontaktstangen 7.1, 7.2, 7.3 und 7.4 auf einem gemeinsamen Durchmesserkreis 37. In Draufsicht auf das Basismodul 20 gesehen, bilden die Längsachsen 27 der Kontaktstangen 7.1, 7.2, 7.3 und 7.4 Punkte des Durchmesserkreises 37. In entsprechender Weise bilden die Längsachsen 26 der inneren Kontaktstangen 6.1, 6.2, 6.3, 6.4, 6.5, 6.6, 6.7, 6.8 einen Durchmesserkreis 36.

Wie Fig. 3 zeigt, liegen die äußeren Kontaktstangen 7.1, 7.2, 7.3, 7.4 mit einem gleichen äußeren Radialabstand Rₐ zur Zentralachse 29. Entsprechend weisen die inneren Kontaktstangen 6.1, 6.2, 6.3, 6.4, 6.5, 6.6, 6.7 und 6.8 einen inneren Radialabstand Rᵢ von der Zentralachse 29 auf. Vorzugsweise ist der äußere Radialabstand Ra größer als der innere Radialabstand Rᵢ. Der Durchmesserkreis 37 der äußeren Kontaktstangen 7.1, 7.2, 7.3, 7.4 ist somit größer als der Durchmesserkreis 36 der inneren Kontaktstangen 6.1, 6.2, 6.3, 6.4, 6.5, 6.6, 6.7 und 6.8. Bevorzugt liegt der innere Durchmesserkreis 36 koaxial innerhalb des äußeren Durchmesserkreises 37.

Das Basismodul 20 weist im gezeigten Ausführungsbeispiel eine mehradrige zuführende Leitung als erste Leitung 1 auf. Beispielhaft sind in Fig. 5 fünf Adern 1.1, 1.2, 1.3, 1.4 und 1.5 der zuführenden ersten Leitung 1 gezeigt. Hierzu sind die einzelnen Adern 1.1 bis 1.5 der ersten Leitung 1 mit den Kontaktstangen 6 bzw. 7 kontaktiert; im schematischen Ausführungsbeispiel ist eine Kontaktierung mit den Kontaktstangen 7.1 und 7.2 sowie den Kontaktstangen 6.1, 6.2 und 6.3 gezeigt. Zweckmäßig sind die Enden 15 bzw. 25 der gezeigten Kontaktstangen unterhalb des Bodens 22 mit einer Anschlussplatine 13 kontaktiert. Über die Anschlussplatine 13 sind die Enden 15 und 25 aller Kontaktstangen 6, 7, in Fig. 5 der gezeigten Kontaktstangen 7.1, 7.2, 6.1, 6.2, 6.3, elektrisch an die Adern 1.1, 1.2, 1.3, 1.4, 1.5 der zuführenden ersten Leitung 1 angeschlossen.

Wie Fig. 5 deutlich macht, sind die Durchmesser D der äußeren Kontaktstangen 7.1, 7.2, 7.3, 7.4 (Figuren 2, 3) mit einem größeren Durchmesser D ausgebildet als die inneren Kontaktstangen 6.1, 6.2, 6.3, 6.4, 6.5, 6.6, 6.7, 6.8 (Figuren 2, 3); die inneren Kontaktstangen 6 haben einen kleineren Durchmesser d.

Die Kontaktstangen 6 und 7 sind aus einem elektrisch leitenden Material gefertigt; es kann ausreichend sein, wenn die Kontaktstangen 6 und 7 eine elektrisch leitende Oberfläche haben, die zur Kontaktierung genutzt werden kann. Die inneren Kontaktstangen 6 mit dem kleineren Durchmesser d bilden zweckmäßig elektrische Signalleitungen. Die äußeren Kontaktstangen 7 mit dem größeren Durchmesser D bilden insbesondere elektrische Versorgungsleitungen.

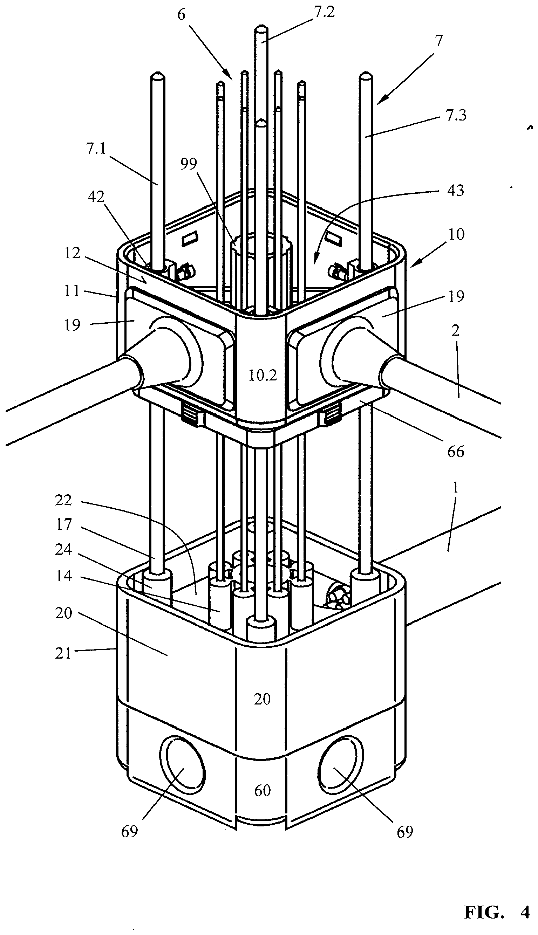

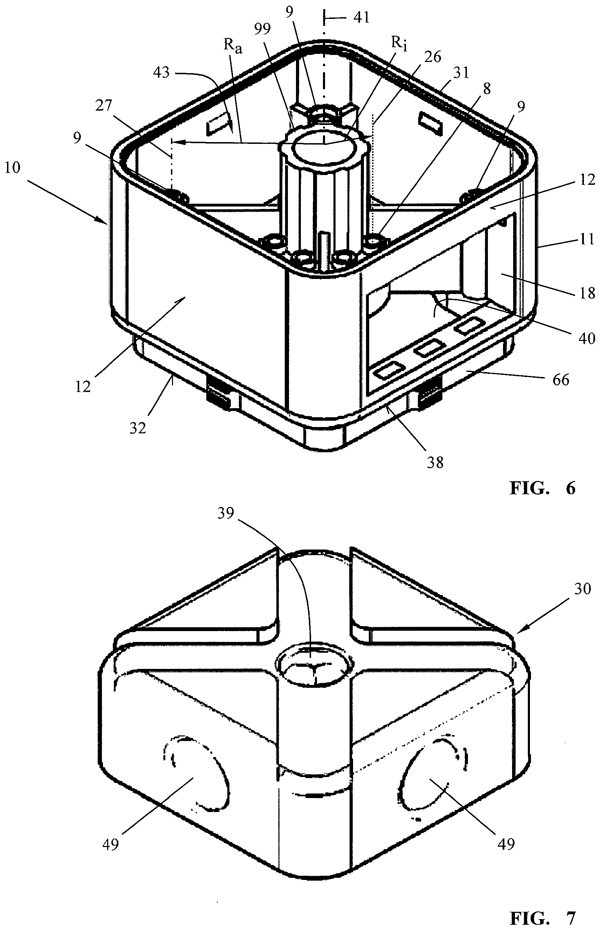

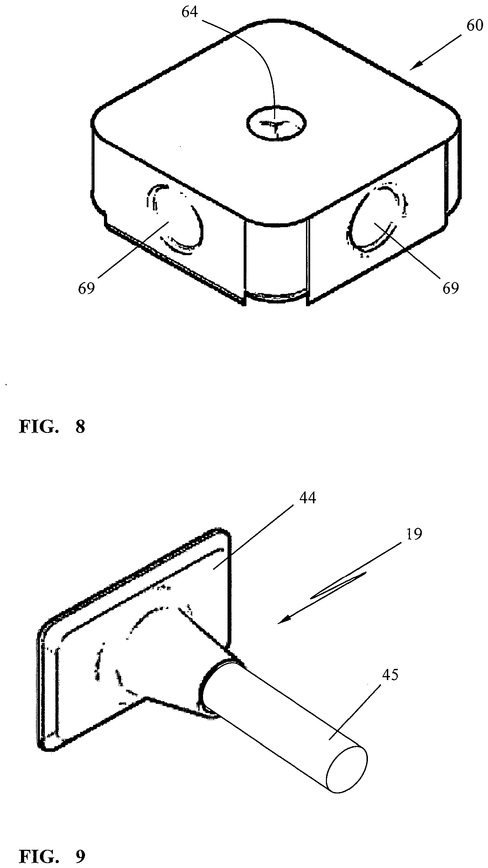

Wie die Figuren 4 und 5 zeigen, sind auf die Kontaktstangen 6, 7 ein oder mehrere Anschlussmodule 10.2, 10.3, 10.4 aufgefädelt. Hierzu ist - wie Fig. 6 zeigt - das Anschlussmodul 10 als Gehäuse 11 gestaltet, welches in zumindest einer Gehäuseseite 12 ein Aufnahmefenster 18 zum Anschluss eines Anschlusselementes 19 aufweist. Beispiele von Anschlusselementen sind in den Figuren 9 bis 13 dargestellt.

Im gezeigten Ausführungsbeispiel weist das Gehäuse 1 eines Anschlussmoduls 10.1, 10.2, 10.3, 10.4, 10.5 in zumindest einer Gehäuseseite 12 ein Aufnahmefenster 18 zur Aufnahme eines Anschlusselementes 19 auf, wobei das Anschlusselement 19 bereits im Produktionsprozess am Anschlussmodul 10.1, 10.2, 10.3, 10.4, 10.5 montiert ist. Ein zur Montage in einem Tower ausgeliefertes Anschlussmodul 10.1, 10.2, 10.3, 10.4, 10.5 weist grundsätzlich eine Anschlussleitung, eine Verschraubung 46 für eine Anschlussleitung und/oder eine Steckverbindung 47 für eine Anschlussleitung auf. Die Anschlussmodule 10.1, 10.2, 10.3, 10.4, 10.5 können in einer anderen Ausgestaltung der Erfindung so ausgebildet sein, dass ein Aufnahmefenster 18 für ein Anschlusselement 19 als Ausbruchfläche gestaltet ist, so dass ein Benutzer vor Ort die Lage des Aufnahmefensters 18 am Anschlussmodul 10.1, 10.2, 10.3, 10.4, 10.5 und die Anzahl der zu öffnenden Aufnahmefenster 18 bestimmen kann.

Das Gehäuse 11 des Anschlussmoduls 10 ist als Gehäusetopf 43 mit einem Boden 40 ausgebildet. Entsprechend der Anordnung der Kontaktstangen 6 und 7 am Basismodul 20 weist das Gehäuse 11 Führungshülsen 8 und 9 auf. Die Führungshülsen 8 und 9 sind lotrecht auf dem Boden 40 angeordnet, wobei die Führungshülsen 8 mit einem Radialabstand Rᵢ um eine Zentralachse 41 des Gehäuses 11 des Anschlussmoduls 10 angeordnet sind. Entsprechend sind die Führungshülsen 9 in den Ecken des Gehäuses 11 mit einem Radialabstand Ra zur Zentralachse 41 des Anschlussmoduls 10 vorgesehen. Zweckmäßig weist der Gehäusetopf einen zentralen Stützdom 99 auf. Der Stützdom 99 kann so ausgelegt sein, dass beim Festschrauben der Zugstange eine Abstützung gegeben ist.

Wird - wie Fig. 4 zeigt - ein Anschlussmodul 10.2 auf die Kontaktstangen 6 und 7 aufgefädelt, so sind die inneren Kontaktstangen 6 in den Führungshülsen 8 und die äußeren Kontaktstangen 7 in den Führungshülsen 9 geführt. Die Führungshülsen 8 und 9 sind vorteilhaft auf den Kontaktstangen 6 und 7 verschiebbar gehalten. Dabei kann es vorteilhaft sein, die Führungshülsen 9 der äußeren Kontaktstangen 7 als Kontaktklemmen 42 auszubilden, bzw. Kontaktklemmen 42 in entsprechende Aufnahmen der Führungshülsen 9 einzusetzen.

Wie Fig. 4 zeigt, durchragen die Kontaktstangen 6 und 7 das Anschlussmodul 10.2; Fig. 5 zeigt, wie zumindest eine dieser Kontaktstangen 6 bzw. 7 mehrere Anschlussmodule 10.2, 10.3 und 10.4 durchragt. Vorteilhaft durchragt eine Kontaktstange 6, 7 ein Anschlussmodul 10, unabhängig davon, ob die Kontaktstange kontaktiert ist oder nicht. Es kann zweckmäßig sein, eine kontaktierte Kontaktstange zu kappen, wie dies in Fig. 5 gezeigt ist. Eine Trennstelle 80 wird immer dort gesetzt, wo bereits eine Kontaktstelle 5 ausgeführt ist. Zweckmäßig sind die Kontaktstangen 6 nur bis zu dem Anschlussmodul 10 geführt, in welchem sie kontaktiert werden. Nach dem Anschlussmodul kann die Kontaktstange 6 abgeschnitten werden.

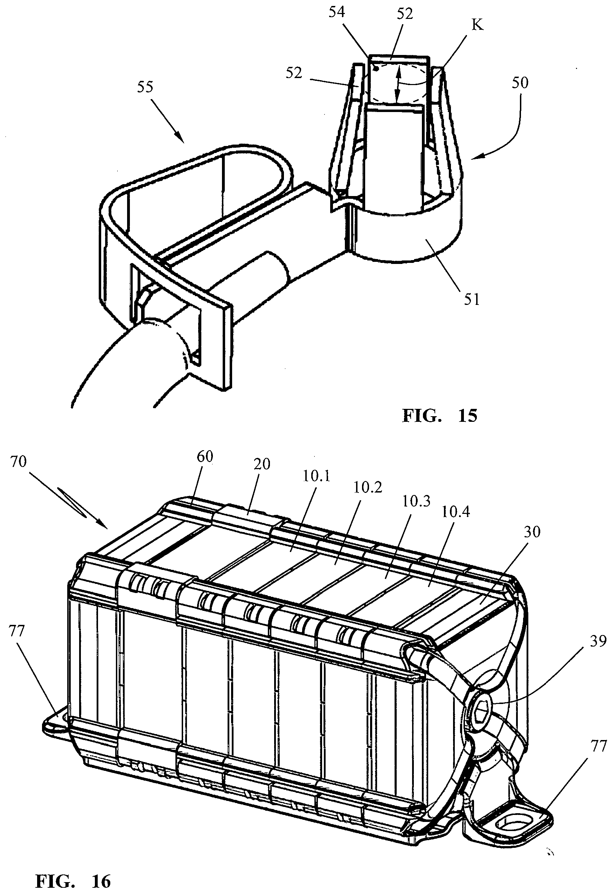

Die Anordnung des Anschlussmoduls 10 auf den Kontaktstangen (Fig. 5) bildet eine mechanische Führung der Anschlussmodule selbst, so dass diese - auf den Kontaktstangen 6 und 7 geführt - in Pfeilrichtung 90 bis zur Auflage auf dem Basismodul 20 nach unten geschoben werden können. Es kann vorteilhaft sein, zusätzlich ein Grundmodul mit weiteren Befestigungslöchern und/oder einer Führungsschiene vorzusehen. Ein liegender Tower - wie in Fig. 16 dargestellt - oder auch ein stehender Tower kann z.B. durch einen Befestigungsflansch 77 am Deckelmodul 30 und/oder am Fußmodul 60 auf einer Unterlage fixiert werden, so z.B. an einer Wand oder auf einem Boden montiert werden.

Die Anschlussmodule 10 und das Basismodul 20, insbesondere auch das Deckelmodul 30 und das Fußmodul 60 haben in Draufsicht die gleiche geometrische Form. Dabei ist eine quadratische Form zweckmäßig.

In Verbindung mit der quadratischen Form und der Anordnung der inneren Kontaktstangen 6 sowie der äußeren Kontaktstangen 7 in einer um 90° drehsymmetrischen Lage ist die Möglichkeit gegeben, jedes Anschlussmodul um 90° gedreht versetzt auf das Basismodul 20 aufzufädeln. Die bei einem Anschlussmodul 10 vorgesehenen Anschlusselemente 19 können vor Ort in einfacher Weise in eine für eine Verkabelung zweckmäßige Lage gebracht werden.

Die Kontaktstangen 7.1, 7.2, 7.3, 7.4 liegen in Umfangsrichtung um die Zentralachse 29 des Basismoduls 20 in einem Winkelabstand von 90° zueinander. Die Kontaktstangen 6.1, 6.2, 6.3, 6.4, 6.5, 6.6, 6.7, 6.8 liegen in Umfangsrichtung um die Zentralachse 29 in einem Winkelabstand von 45° zueinander.

Wie Fig. 5 zeigt, besteht der modulare Verteiler 70 für zugehende und abgehende elektrischen Leitungen 1, 2, 3, 4 zumindest aus dem Basismodul 20 mit einer ersten elektrischen Leitung 1 als zuführende Leitung und zumindest einem Anschlussmodul 10 mit einer zweiten elektrischen Leitung 2 als zuführende und/oder abgehende elektrische Leitung.

Die Kontaktstangen 6 und 7 des Basismoduls durchragen im Ausführungsbeispiel jedes Anschlussmodul 10. Ein Anschlussmodul 10 wird über die Führungshülsen 8 und 9 auf die Kontaktstangen 6, 7 lagerichtig aufgefädelt. Dabei durchragen die Kontaktstangen 6 und 7 das Anschlussmodul 10, wobei - wie Fig. 5 zeigt - eine z. B. fünfadrige abführende Leitung 2 mit Adern 2.1, 2.2, 2.3, 2.4 und 2.5 zumindest mit einigen Adern über die Kontaktstangen 6 bzw. 7 mit einigen Adern 1.1, 1.2, 1.3, 1.4 und 1.5 der zuführenden Leitung 1 des Basismoduls 20 kontaktiert werden. In Fig. 5 ist gezeigt, dass die Kontaktstange 7.1 die elektrische Verbindung 33 zwischen einer ersten Ader 1.1 der ersten Leitung 1 und einer zweiten Ader 2.2 der zweiten Leitung 2 bildet. In entsprechender Weise bildet die Kontaktstange 6.1 eine elektrische Verbindung 34 zwischen einer zweiten Ader 1.3 der ersten Leitung 1 und einer vierten Ader 2.4 der zweiten Leitung 2 des Anschlussmoduls 10.2. Über eine dritte elektrische Verbindung 35 wird eine fünfte Ader 1.5 der zuführenden ersten elektrischen Leitung 1 mit einer fünften Ader 2.5 der zweiten Leitung 2 des Anschlussmoduls 10.2 verbunden.

Über die Kontaktstangen 7.1 und 7.2 kann auf die zweite Leitung 2 eine Versorgungsspannung aufgeschaltet werden; über die Kontaktstange 6.1 ist eine Signalverbindung hergestellt, so dass z. B. an der Leitung 2 ein Sensor oder dgl. betrieben werden kann.

Das Gehäuse 11 eines Anschlussmoduls 10 ist als offener Gehäusetopf 43 gestaltet, wobei die elektrische Kontaktstelle 5 einer Ader 2.1, 2.2, 2.3, 2.4, 2.5 der zweiten Leitung 2 des Anschlussmoduls 10 mit einer der Kontaktstangen 6, 7 innerhalb des Gehäusetopfes liegt. Wie insbesondere Fig. 1 zeigt, ist der Gehäusetopf 43 eines Anschlussmoduls 10.2 durch ein auf der Kontaktstange 6, 7 folgendes, benachbartes Anschlussmodul 10.3 verschlossen; vorteilhaft ist der Gehäusetopf 43 durch den Boden 40 eines auf der Kontaktstange 6, 7 folgenden, benachbarten Anschlussmoduls 10.3 verschlossen.

In dem dargestellten Ausführüngsbeispiel ist zwischen dem Gehäuserand 31 des Gehäusetopfes 43 und dem gegenüberliegenden Rand 32 des Bodens 40 eine Dichtung 66 vorgesehen. Diese Dichtung kann in einfacher Weise als O-Ring ausgebildet sein, der eine radiale Abdichtung zwischen den benachbarten Anschlussmodulen gewährleistet. In einer anderen Ausbildung kann, wie insbesondere Fig. 6 zeigt, die Dichtung 66 im Querschnitt vorteilhaft ein L-Form haben. Der Rand 32 der Dichtung 66 greift in den Gehäuserand 31 eines Anschlussmoduls 10 ein, wodurch der Gehäuserand 31 eines benachbarten Anschlussmoduls auf einer umlaufenden Schulter 38 der Dichtung 66 aufsitzt. Dadurch wird eine gute Axialdichtung erzielt, die durch die aufgebrachte Spannkraft über die Zugstange 61 eine sichere Abdichtung gewährleistet; darüber hinaus kann eine radiale Abdichtung durch Eingreifen der Dichtung 66 in den Gehäuserand 31 erfolgen.

In einer einfachen Ausgestaltung der Dichtung 66 kann diese als axiale, aufgeschäumte Dichtung gestaltet sein. Eine derartige Dichtung kann unverlierbar mit dem Anschlussmodul verbunden sein. Vorteilhaft kann die axiale, aufgeschäumte Dichtung bei der Herstellung des Anschlussmoduls gefertigt werden.

Das Deckelmodul 30 ist ein einfaches Verschlussmodul mit einer zentralen Öffnung 39 für die Zugstange 61. Es kann zweckmäßig sein, in den Seitenwänden des Deckelmoduls Ausbruchsflächen 49 zum Anschließen weiterer Kabel, insbesondere zum elektrischen Weiterschleifen in einen benachbarten Verteiler vorzusehen.

In entsprechender Weise ist im Fußmodul 60 (Fig. 8) eine zentrale Öffnung 64 zum Durchführen der Zugstange 61 vorgesehen. Auch in den Seitenflächen des Fußteils können Ausbruchsflächen 69 zur Führung von Leitungen vorgesehen sein.

Vorteilhaft ist ein Fußmodul 60 oder ein Deckelmodul 30 ohne Anschlussleitung vorgesehen. Es kann vorteilhaft sein, das Fußmodul 60 oder ein Deckelmodul 30 als selbstschließendes Modul auszubilden. Alternativ kann das Fußmodul 60 oder ein Deckelmodul 30 mit bereits konfektionierter Anschlussleitung und/oder mit Steckverbinder und/oder mit einem Klemmenanschluss und/oder mit einem Steckanschluss ausgebildet sein.

Die in die Aufnahmefenster 18 eines Anschlussmoduls 10 einzusetzenden Anschlusselemente 19 können unterschiedlich, insbesondere der Anwendung angepasst gestaltet sein, wie die Figuren 9 bis 13 zeigen. Ein derartiges Anschlusselement 19 hat eine Grundplatte 44, die zum Einsetzen in das Aufnahmefenster 18 entsprechend gestaltet ist. Die Grundplatte 44 kann hart ausgebildet sein oder aus einem elastischen Material bestehen.

Das Anschlusselement nach Fig. 9 ist am Ende einer Stammleitung 45 fest angeordnet. Derartige Anschlusselemente 19 sind entsprechend vorkonfektioniert.

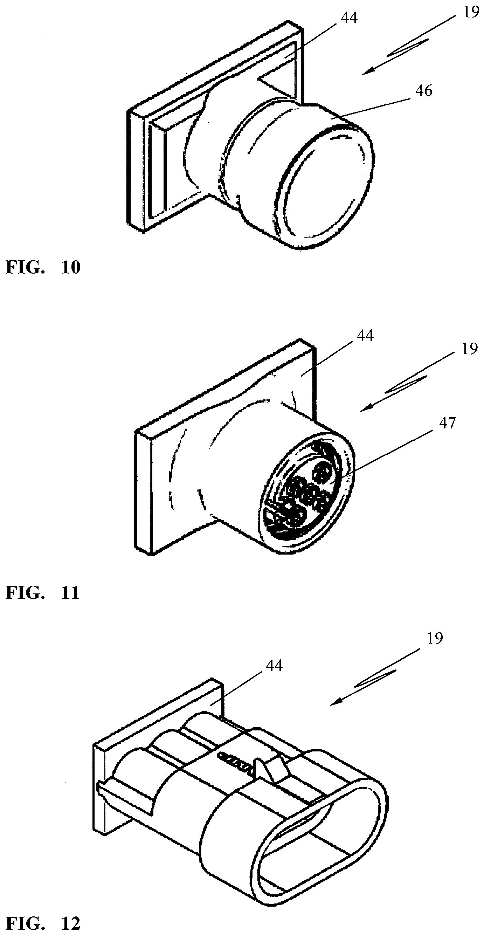

Das Anschlusselement 19 nach Fig. 10 zeigt eine Kabelverschraubung 46, welche an einer entsprechenden Grundplatte 44 vorgesehen ist. Eine derartige Kabelverschraubung dient dem Anschließen von beliebigen Leitungen; durch Festziehen der Kabelverschraubung 46 wird ein dichter Sitz der zugeführten bzw. abgeführten Leitung erzielt.

Das Anschlusselement 19 nach Fig. 11 zeigt einen Rundsteckverbinder 47 als Buchse. Hieran können Stecker entsprechend vorkonfektionierter Leitungen in einfacher Weise angeschlossen werden.

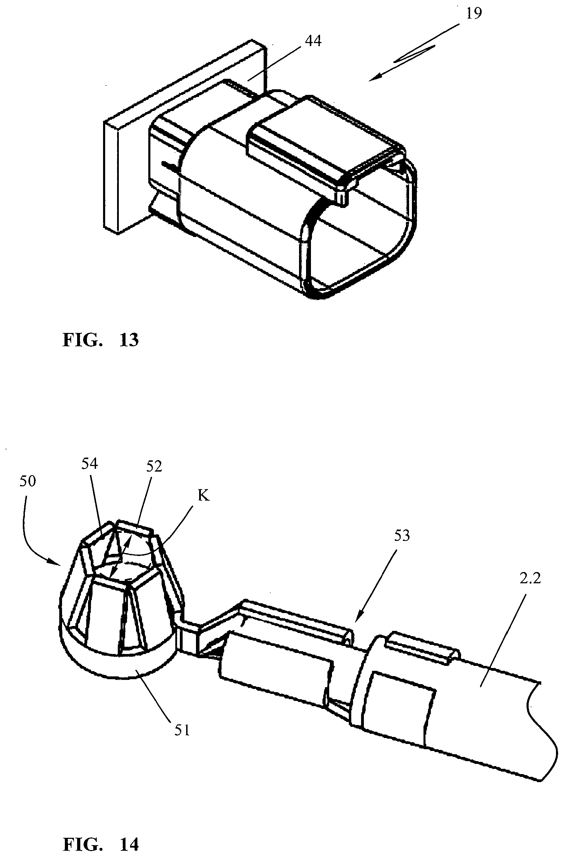

Die Figuren 12 und 13 zeigen Anschlusselemente nach verschiedenen Normen; die in Fig. 12 gezeigte Steckverbindung entspricht einer als "Super-Seal" gebräuchlichen Steckverbindung; Fig. 13 zeigt einen als "Deutsch-Steckverbindung" bekannten Anschluss.

Die Adern 2.1 bis 2.5, 3.1 bis 3.5 bzw. 4.1 bis 4.5 der Leitungen 2, 3, 4 der Anschlussmodule 10.2, 10.3, 10.4 werden zweckmäßig über federnde Kontaktklemmen 50 mit ausgewählten Kontaktstangen 6.1, 6.2, 6.3, 6.4, 6.5, 6.6, 6.7, 6.8, 7.1, 7.2, 7.3, 7.4 elektrisch kontaktiert. Die federnde Kontaktklemme 50 ist vorteilhaft als Käfigfederzugklemme 51 mit mehreren federnden Kontaktzungen 52 ausgebildet. In Fig. 14 wird die Ader 2.2 über einen Crimpanschluss 53 mit der Kontaktklemme 50 verbunden. Die Kontaktklemme 50 umgreift ringförmig eine Kontaktstange, wobei die Kontaktklemme 50 axial auf die Kontaktstange aufgeschoben wird. Dabei weichen die Kontaktzungen 52 zurück und liegen mit Federkraft an der Kontaktstange an. In der in Fig. 14 gezeigten Ruhestellung bilden die Enden der Kontaktzungen 52 einen Kontaktkreis 54 mit einem Kontaktdurchmesser K. Die Auslegung der Kontaktklemme 50 ist derart vorgesehen, dass der Kontaktdurchmesser K kleiner als der Durchmesser d einer Kontaktstange 6 ist; sollte das Kontaktelement mit einer Kontaktstange 7 kontaktiert werden, ist es ausreichend, wenn der Kontaktdurchmesser K kleiner als der Durchmesser D der Kontaktstange 7 ausgelegt ist. Zweckmäßig ist der Kontaktdurchmesser K kleiner als der kleinere Durchmesser d der Kontaktstange 6 ausgelegt.

Im Ausführungsbeispiel nach Fig. 15 ist die Kontaktklemme 50 dem Grunde nach gleich aufgebaut wie die Kontaktklemme 50 nach Fig. 14. Während die Kontaktklemme 50 in Fig. 14 sechs Kontaktzungen 52 aufweist, hat die vereinfachte Kontaktklemme 50 in Fig. 15 lediglich vier Kontaktzungen 52, die ebenfalls einen Kontaktkreis 54 bestimmen. Der Durchmesser des Kontaktkreises K ist kleiner als der Durchmesser D einer Kontaktstange 7, bevorzugt kleiner als der Durchmesser d einer Kontaktstange 6.

Die Ader 2.2 einer Leitung 2 wird in Fig. 15 über eine Federklemme 55 auswechselbar angeschlossen. Die Kontaktklemme 50 nach Fig. 14 ist bevorzugt für vorkonfektionierte Kabel vorgesehen, während die Kontaktklemme 50 nach Fig. 15 für frei anzuschließende Leitungen ausgelegt ist.

In Fig. 16 ist schematisch ein liegender Tower bzw. Verteiler 70 dargestellt, der vier Anschlussmodule 10.1, 10.2, 10.3, 10.4 aufweist. Das Deckelmodul 30 weist zumindest einen Befestigungsflansch 77 auf, der zur Befestigung auf einem Untergrund dient. Entsprechend kann das Fußmodul 60 einen Befestigungsflansch 77 aufweisen. Zweckmäßig liegen die Befestigungsflansche 77 von Fußmodul 60 und Deckelmodul 30 auf einer Verteilerseite; durch um 90° versetztes Montieren des Fußmoduls 60 und/oder des Deckelmoduls 30 kann die Lage des Befestigungsflansches 77 dem Einsatzort entsprechend gewählt werden.

Mittels der Befestigungsflansche 77 kann der Verteiler 70 bzw. der Tower liegend oder stehend in einer beliebigen Lage zur Horizontalen oder Vertikalen montiert werden.

## Patentansprüche

1. Modularer Verteiler (70) für zugehende und abgehende elektrische Leitungen (1, 2, 3, 4), bestehend aus zumindest einem Basismodul (20) mit einer ersten elektrischen Leitung (1) und einem Anschlussmodul (10) mit einer zweiten elektrischen Leitung (2), wobei zumindest eine erste Ader (1.1, 1.2, 1.3, 1,4, 1.5) der ersten elektrischen Leitung (1) mit einer zweiten Ader (2.1, 2.2, 2.3, 2.4, 2.5) der zweiten elektrischen Leitung (2) kontaktiert ist, wobei am Basismodul (20) zumindest zwei Kontaktstangen (6.1, 6.2, 6.3, 6.4, 6.5, 6.6, 6.7, 6.8, 7.1, 7.2, 7.3, 7.4) gehalten sind, wobei das Anschlussmodul (10) auf die Kontaktstangen (6.1, 6.2. 6.3, 6.4, 6.5, 6.6, 6.7, 6.8, 7.1, 7.2, 7.3, 7.4) aufgeschoben ist und die Kontaktstangen (6.1, 6.2, 6.3, 6.4, 6.5, 6.6, 6.7, 6.8, 7.1, 7.2, 7.3, 7.4) das Anschlussmodul (10) durchragen, und wobei eine Kontaktstange (6.1, 6.2. 6.3, 6.4, 6.5, 6.6, 6.7, 6.8, 7.1, 7.2, 7.3, 7.4) die elektrische Verbindung (33, 34, 35) zwischen einer ersten Ader (1.1, 1.2, 1.3, 1,4, 1.5) der ersten Leitung (1) und einer zweiten Ader (2.1, 2.2, 2.3, 2.4, 2.5) der zweiten Leitung (2) bildet, und wobei das Basismodul (20) eine Zentralachse (29) aufweist, **dadurch gekennzeichnet, dass** auf dem Boden (22) des Basismoduls (20) mehrere äußere Kontaktstangen (7.1, 7.2, 7.3, 7.4) mit einem äußeren Radialabstand (Rₐ) zur Zentralachse (29) und mehrere innere Kontaktstangen (6.1, 6.2, 6.3, 6.4, 6.5, 6.6, 6.7, 6.8) mit einem inneren Radialabstand (Rᵢ) zur Zentralachse (29) gehalten sind, wobei der innere Radialabstand (Rᵢ) kleiner als der äußere Radialabstand (Rₐ) ist, und dass die Längsachsen (26, 27) der inneren oder der äußeren Kontaktstangen (6.1, 6.2, 6.3, 6.4, 6.5, 6.6, 6.7, 6.8, 7.1, 7.2, 7.3, 7.4) auf einem gemeinsamen Durchmesserkreis (36, 37) liegen.

2. Verteiler nach Anspruch 1,
**dadurch gekennzeichnet, dass** das Anschlussmodul (10) auf zumindest einer Kontaktstange (6.1, 6.2, 6.3, 6.4, 6.5, 6.6, 6.7, 6.8, 7.1, 7.2, 7.3, 7.4) mechanisch geführt ist.

3. Verteiler nach Anspruch 1 oder 2,
**dadurch gekennzeichnet, dass** zumindest eine Kontaktstange (6.1, 6.2, 6.3, 6.4, 6.5, 6.6, 6.7, 6.8, 7.1, 7.2, 7.3, 7.4) mehrere Anschlussmodule (10.1, 10.2, 10.3, 10.4, 10.5) durchragt.

4. Verteiler nach einem der Ansprüche 1 bis 3,
**dadurch gekennzeichnet, dass** das Anschlussmodul (10.1, 10.2, 10.3, 10.4, 10.5) ein Gehäuse (11) mit einer Führungshülse (8, 9) aufweist, wobei eine Führungshülse (8, 9) auf einer Kontaktstange (6.1, 6.2, 6.3, 6.4, 6.5, 6.6, 6.7, 6.8, 7.1, 7.2, 7.3, 7.4) axial verschiebbar gehalten ist.

5. Verteiler nach Anspruch 4,
**dadurch gekennzeichnet, dass** zumindest eine Führungshülse (8, 9) des Gehäuses (11) als elektrische Kontaktklemme (42) ausgebildet ist.

6. Verteiler nach Anspruch 4,
**dadurch gekennzeichnet, dass** das Gehäuse (11) des Anschlussmoduls (10.1, 10.2, 10.3, 10.4, 10.5) als Gehäusetopf (43) mit einem Boden (40) ausgebildet ist, und dass der elektrische Kontakt (5) einer Ader (2.1, 2.2, 2.3, 2.4, 2.5) der elektrischen Leitung (2) des Anschlussmoduls (10.1, 10.2, 10.3, 10.4, 10.5) mit einer Kontaktstange (6.1, 6.2, 6.3, 6.4, 6.5, 6.6, 6.7, 6.8, 7.1, 7.2, 7.3, 7.4) innerhalb des Gehäusetopfes (43) liegt.

7. Verteiler nach Anspruch 6,
**dadurch gekennzeichnet, dass** der Gehäusetopf (43) des Anschlussmoduls (10.1, 10.2, 10.3, 10.4, 10.5) durch einen Boden (40) eines auf der Kontaktstange (6.1, 6.2, 6.3, 6.4, 6.5, 6.6, 6.7, 6.8, 7.1, 7.2, 7.3, 7.4) folgenden, benachbarten Anschlussmoduls (10.2, 10.3, 10.4, 10.5) verschlossen ist.

8. Verteiler nach Anspruch 7,
**dadurch gekennzeichnet, dass** zwischen einem Anschlussmodul (10.1, 10.2, 10.3, 10.4, 10.5) und einem auf der Kontaktstange (6.1, 6.2, 6.3, 6.4, 6.5, 6.6, 6.7, 6.8, 7.1, 7.2, 7.3, 7.4) folgenden, benachbarten Anschlussmodul (10.2, 10.3, 10.4, 10.5) eine Dichtung (66) angeordnet ist.

9. Verteiler nach einem der Ansprüche 1 bis 8,
**dadurch gekennzeichnet, dass** das Gehäuse (11) des Anschlussmoduls (10.1, 10.2, 10.3, 10.4, 10.5) in zumindest einer Gehäuseseite (12) ein Aufnahmefenster (18) zur Aufnahme eines Anschlusselementes (19) aufweist.

10. Verteiler nach einem der Ansprüche 1 bis 9,
**dadurch gekennzeichnet, dass** die elektrische Verbindung (33, 34, 35) zwischen einer Ader (2.1, 2.2, 2.3, 2.4, 2.5) der elektrischen Leitung (2) des Anschlussmoduls (10.1, 10.2, 10.3, 10.4, 10.5) und einer der Kontaktstangen (6.1, 6.2, 6.3, 6.4, 6.5, 6.6, 6.7, 6.8, 7.1, 7.2, 7.3, 7.4) als federnde Kontaktklemme (50) ausgebildet ist, die axial verschiebbar auf der Kontaktstange (6.1, 6.2, 6.3, 6.4, 6.5, 6.6, 6.7, 6.8, 7.1, 7.2, 7.3, 7.4) gehalten ist.

11. Verteiler nach Anspruch 10,
**dadurch gekennzeichnet, dass** die Kontaktklemme (50) als Käfigfederzugklemme (51) ausgebildet ist, die von einer Kontaktstange (6.1, 6.2, 6.3, 6.4, 6.5, 6.6, 6.7, 6.8, 7.1, 7.2, 7.3, 7.4) durchragt ist.

12. Verteiler nach einem der Ansprüche 1 bis 11,
**dadurch gekennzeichnet, dass** die Kontaktstangen (6.1, 6.2, 6.3, 6.4, 6.5, 6.6, 6.7, 6.8, 7.1, 7.2, 7.3, 7.4) auf einem Boden (22) des Basismoduls (20) gehalten und die Adern (1.1, 1.2, 1.3, 1.4, 1.5) der ersten Leitung (1) unterhalb des Bodens (22) über eine Anschlussplatine (13) an die Enden (15, 25) der Kontaktstangen (6.1, 6.2, 6.3, 6.4, 6.5, 6.6, 6.7, 6.8, 7.1, 7.2, 7.3, 7.4) elektrisch angeschlossen sind.

13. Verteiler nach Anspruch 1,
**dadurch gekennzeichnet, dass** die inneren Kontaktstangen (6.1, 6.2, 6.3, 6.4, 6.5, 6.6, 6.7, 6.8) elektrische Signalleitungen und die äußeren Kontaktstangen (7.1, 7.2, 7.3, 7.4) elektrische Versorgungsleitungen bilden.

## Claims

1. Modular distribution board (70) for incoming and outgoing electrical conductors (1, 2, 3, 4), comprising at least a base module (20) having a first electrical conductor (1), and a connecting module (10) having a second electrical conductor (2), wherein at least a first core (1.1, 1.2, 1.3, 1.4, 1.5) of the first electrical conductor (1) is bonded with a second core (2.1, 2.2, 2.3, 2.4, 2.5) of the second electrical conductor (2), wherein the base module (20) is provided with at least two contact rods (6.1, 6.2, 6.3, 6.4, 6.5, 6.6, 6.7, 6.8, 7.1, 7.2, 7.3, 7.4), wherein the connecting module (10) is fitted onto the contact rods (6.1, 6.2, 6.3, 6.4, 6.5, 6.6, 6.7, 6.8, 7.1, 7.2, 7.3, 7.4), and the contact rods (6.1, 6.2, 6.3, 6.4, 6.5, 6.6, 6.7, 6.8, 7.1, 7.2, 7.3, 7.4) penetrate the connecting module (10), and wherein one contact rod (6.1, 6.2, 6.3, 6.4, 6.5, 6.6, 6.7, 6.8, 7.1, 7.2, 7.3, 7.4) forms the electrical connection (33, 34, 35) between a first core (1.1, 1.2, 1.3, 1.4, 1.5) of the first conductor (1) and a second core (2.1, 2.2, 2.3, 2.4, 2.5) of the second conductor (2), and wherein the base module (20) has a central axis (29), **characterized in that** a plurality of outer contact rods (7.1, 7.2, 7.3, 7.4) with an outer radial clearance (Rₐ) to the central axis (29) and a plurality of inner contact rods (6.1, 6.2, 6.3, 6.4, 6.5, 6.6, 6.7, 6.8) with an inner radial clearance (Rᵢ) to the central axis (29) are provided on the base (22) of the base module (20), wherein the inner radial clearance (Rᵢ) is smaller than the outer radial clearance (Rₐ), and **in that** the longitudinal axes (26, 27) of the inner or outer contact rods (6.1, 6.2, 6.3, 6.4, 6.5, 6.6, 6.7, 6.8, 7.1, 7.2, 7.3, 7.4) are arranged on a common diametral circle (36, 37).

2. Distribution board according to claim 1,
**characterized in that** the connecting module (10) is mechanically guided on at least one contact rod (6.1, 6.2, 6.3, 6.4, 6.5, 6.6, 6.7, 6.8, 7.1, 7.2, 7.3, 7.4).

3. Distribution board according to claim 1 or 2,
**characterized in that** at least one contact rod (6.1, 6.2, 6.3, 6.4, 6.5, 6.6, 6.7, 6.8, 7.1, 7.2, 7.3, 7.4) penetrates a plurality of connecting modules (10.1, 10.2, 10.3, 10.4, 10.5).

4. Distribution board according to one of claims 1 to 3,
**characterized in that** the connecting module (10.1, 10.2, 10.3, 10.4, 10.5) has a housing (11) with a guide bush (8, 9), wherein a guide bush (8, 9) is arranged for axial displacement on a contact rod (6.1, 6.2, 6.3, 6.4, 6.5, 6.6, 6.7, 6.8, 7.1, 7.2, 7.3, 7.4).

5. Distribution board according to claim 4,
**characterized in that** at least one guide bush (8, 9) on the housing (11) is configured as an electrical contact clamp (42).

6. Distribution board according to claim 4,
**characterized in that** the housing (11) of the connecting module (10.1, 10.2, 10.3, 10.4, 10.5) is configured as a cup-type housing (43) having a base (40), and **in that** the electrical contact (5) of one core (2.1, 2.2, 2.3, 2.4, 2.5) of the electrical conductor (2) of the connecting module (10.1, 10.2, 10.3, 10.4, 10.5) is formed with a contact rod (6.1, 6.2, 6.3, 6.4, 6.5, 6.6, 6.7, 6.8, 7.1, 7.2, 7.3, 7.4) within the cup-type housing (43).

7. Distribution board according to claim 6,
**characterized in that** the cup-type housing (43) of the connecting module (10.1, 10.2, 10.3, 10.4, 10.5) is closed by a base (40) of the next adjoining connecting module (10.2, 10.3, 10.4, 10.5) in sequence on the contact rod (6.1, 6.2, 6.3, 6.4, 6.5, 6.6, 6.7, 6.8, 7.1, 7.2, 7.3, 7.4).

8. Distribution board according to claim 7,
**characterized in that** a seal (66) is arranged between one connecting module (10.1, 10.2, 10.3, 10.4, 10.5) and the next adjoining connecting module (10.2, 10.3, 10.4, 10.5) in sequence on the contact rod (6.1, 6.2, 6.3, 6.4, 6.5, 6.6, 6.7, 6.8, 7.1, 7.2, 7.3, 7.4).

9. Distribution board according to one of claims 1 to 8,
**characterized in that** the housing (11) of the connecting module (10.1, 10.2, 10.3, 10.4, 10.5), in at least one side (12) of the housing, incorporates a location window (18) for the location of a connecting element (19).

10. Distribution board according to one of claims 1 to 9,
**characterized in that** the electrical connection (33, 34, 35) between a core (2.1, 2.2, 2.3, 2.4, 2.5) of the electrical conductor (2) of the connecting module (10.1, 10.2, 10.3, 10.4, 10.5) and one of the contact rods (6.1, 6.2, 6.3, 6.4, 6.5, 6.6, 6.7, 6.8, 7.1, 7.2, 7.3, 7.4) is configured in the form of a spring contact clamp (50) which is maintained in position for axial displacement on the contact rod (6.1, 6.2, 6.3, 6.4, 6.5, 6.6, 6.7, 6.8, 7.1, 7.2, 7.3, 7.4).

11. Distribution board according to claim 10,
**characterized in that** the contact clamp (50) is configured as a spring-cage connector (51), which is penetrated by a contact rod (6.1, 6.2, 6.3, 6.4, 6.5, 6.6, 6.7, 6.8, 7.1, 7.2, 7.3, 7.4).

12. Distribution board according to one of claims 1 to 11,
**characterized in that** the contact rods (6.1, 6.2, 6.3, 6.4, 6.5, 6.6, 6.7, 6.8, 7.1, 7.2, 7.3, 7.4) are arranged on a base (22) of the base module (20), and the cores (1.1, 1.2, 1.3, 1.4, 1.5) of the first conductor (1) are electrically connected below the base (22) to the ends (15, 25) of the contact rods (6.1, 6.2, 6.3, 6.4, 6.5, 6.6, 6.7, 6.8, 7.1, 7.2, 7.3, 7.4) via a contact plate (13).

13. Distribution board according to claim 1,
**characterized in that** the inner contact rods (6.1, 6.2, 6.3, 6.4, 6.5, 6.6, 6.7, 6.8) form electrical signal lines and the outer contact rods (7.1, 7.2, 7.3, 7.4) form electrical supply conductors.

## Revendications

1. Répartiteur modulaire (70) pour lignes électriques entrantes et sortantes (1, 2, 3, 4), constitué d'au moins un module de base (20) doté d'une première ligne électrique (1) et d'un module de raccordement (10) doté d'une deuxième ligne électrique (2), au moins un premier brin (1.1, 1.2, 1.3, 1,4, 1.5) de la première ligne électrique (1) étant mis en contact avec un deuxième brin (2.1, 2.2, 2.3, 2.4, 2.5) de la deuxième ligne électrique (2),
au moins deux tiges de contact (6.1, 6.2, 6.3, 6.4, 6.5, 6.6, 6.7, 6.8, 7.1, 7.2, 7.3, 7.4) étant retenues sur le module de base (20), le module de raccordement (10) étant enfilé sur les tiges de contact (6.1, 6.2, 6.3, 6.4, 6.5, 6.6, 6.7, 6.8, 7.1, 7.2, 7.3, 7.4) et les tiges de contact (6.1, 6.2, 6.3, 6.4, 6.5, 6.6, 6.7, 6.8, 7.1, 7.2, 7.3, 7.4) traversant le module de raccordement (10), et une tige de contact (6.1, 6.2, 6.3, 6.4, 6.5, 6.6, 6.7, 6.8, 7.1, 7.2, 7.3, 7.4) formant la connexion électrique (33, 34, 35) entre un premier brin (1.1, 1.2, 1.3, 1,4, 1.5) de la première ligne (1) et un deuxième brin (2.1, 2.2, 2.3, 2.4, 2.5) de la deuxième ligne (2), et le module de base (20) comprenant un axe central (29), **caractérisé en ce que**,
sur le fond (22) du module de base (20), plusieurs tiges de contact extérieures (7.1, 7.2, 7.3, 7.4) sont retenues avec une distance radiale extérieure (Rₐ) par rapport à l'axe central (29) et plusieurs tiges de contact intérieures (6.1, 6.2, 6.3, 6.4, 6.5, 6.6, 6.7, 6.8) sont retenues avec une distance radiale intérieure (Rᵢ) par rapport à l'axe central (29), la distance radiale intérieure (Rᵢ) étant inférieure à la distance radiale extérieure (Rₐ), et **en ce que** les axes longitudinaux (26, 27) des tiges de contact intérieures ou des tiges de contact extérieures (6.1, 6.2, 6.3, 6.4, 6.5, 6.6, 6.7, 6.8, 7.1, 7.2, 7.3, 7.4) se situent sur un cercle de diamètre (36, 37) commun.

2. Répartiteur selon la revendication 1,
**caractérisé en ce que** le module de raccordement (10) est guidé mécaniquement sur au moins une tige de contact (6.1, 6.2, 6.3, 6.4, 6.5, 6.6, 6.7, 6.8, 7.1, 7.2, 7.3, 7.4).

3. Répartiteur selon la revendication 1 ou 2,
**caractérisé en ce qu'**au moins une tige de contact (6.1, 6.2, 6.3, 6.4, 6.5, 6.6, 6.7, 6.8, 7.1, 7.2, 7.3, 7.4) traverse plusieurs modules de raccordement (10.1, 10.2, 10.3, 10.4, 10.5).

4. Répartiteur selon l'une des revendications 1 à 3,
**caractérisé en ce que** le module de raccordement (10.1, 10.2, 10.3, 10.4, 10.5) comprend un boîtier (11) doté d'une douille de guidage (8, 9), une douille de guidage (8, 9) étant retenue de manière axialement déplaçable sur une tige de contact (6.1, 6.2, 6.3, 6.4, 6.5, 6.6, 6.7, 6.8, 7.1, 7.2, 7.3, 7.4).

5. Répartiteur selon la revendication 4,
**caractérisé en ce qu'**au moins une douille de guidage (8, 9) du boîtier (11) est réalisée sous forme de borne de contact électrique (42).

6. Répartiteur selon la revendication 4,
**caractérisé en ce que** le boîtier (11) du module de raccordement (10.1, 10.2, 10.3, 10.4, 10.5) est réalisé sous forme de pot formant boîtier (43) doté d'un fond (40), et **en ce que** le contact électrique (5) d'un brin (2.1, 2.2, 2.3, 2.4, 2.5) de la ligne électrique (2) du module de raccordement (10.1, 10.2, 10.3, 10.4, 10.5) avec une tige de contact (6.1, 6.2, 6.3, 6.4, 6.5, 6.6, 6.7, 6.8, 7.1, 7.2, 7.3, 7.4) est situé à l'intérieur du pot formant boîtier (43).

7. Répartiteur selon la revendication 6,
**caractérisé en ce que** le pot formant boîtier (43) du module de raccordement (10.1, 10.2, 10.3, 10.4, 10.5) est formé par un fond (40) d'un module de raccordement (10.2, 10.3, 10.4, 10.5) adjacent suivant la tige de contact (6.1, 6.2, 6.3, 6.4, 6.5, 6.6, 6.7, 6.8, 7.1, 7.2, 7.3, 7.4).

8. Répartiteur selon la revendication 7,
**caractérisé en ce qu'**un joint d'étanchéité (66) est disposé entre un module de raccordement (10.1, 10.2, 10.3, 10.4, 10.5) et un module de raccordement (10.2, 10.3, 10.4, 10.5) adjacent suivant la tige de contact (6.1, 6.2, 6.3, 6.4, 6.5, 6.6, 6.7, 6.8, 7.1, 7.2, 7.3, 7.4).

9. Répartiteur selon l'une des revendications 1 à 8,
**caractérisé en ce que** le boîtier (11) du module de raccordement (10.1, 10.2, 10.3, 10.4, 10.5) comprend, dans au moins un côté de boîtier (12), une fenêtre de réception (18) pour la réception d'un élément de raccordement (19).

10. Répartiteur selon l'une des revendications 1 à 9,
**caractérisé en ce que** la connexion électrique (33, 34, 35) entre un brin (2.1, 2.2, 2.3, 2.4, 2.5) de la ligne électrique (2) du module de raccordement (10.1, 10.2, 10.3, 10.4, 10.5) et l'une des tiges de contact (6.1, 6.2, 6.3, 6.4, 6.5, 6.6, 6.7, 6.8, 7.1, 7.2, 7.3, 7.4) est réalisée sous forme de borne de contact élastique (50) qui est retenue de manière axialement déplaçable sur la tige de contact (6.1, 6.2, 6.3, 6.4, 6.5, 6.6, 6.7, 6.8, 7.1, 7.2, 7.3, 7.4).

11. Répartiteur selon la revendication 10,
**caractérisé en ce que** la borne de contact (50) est réalisée sous forme de borne à cage à ressort (51) qui est traversée par une tige de contact (6.1, 6.2, 6.3, 6.4, 6.5, 6.6, 6.7, 6.8, 7.1, 7.2, 7.3, 7.4).

12. Répartiteur selon l'une des revendications 1 à 11,
**caractérisé en ce que** les tiges de contact (6.1, 6.2, 6.3, 6.4, 6.5, 6.6, 6.7, 6.8, 7.1, 7.2, 7.3, 7.4) sont retenues sur un fond (22) du module de base (20) et les brins (1.1, 1.2, 1.3, 1.4, 1.5) de la première ligne (1) sont raccordés électriquement aux extrémités (15, 25) des tiges de contact (6.1, 6.2, 6.3, 6.4, 6.5, 6.6, 6.7, 6.8, 7.1, 7.2, 7.3, 7.4) en dessous du fond (22) par le biais d'une plaque de raccordement (13).

13. Répartiteur selon la revendication 1,
**caractérisé en ce que** les tiges de contact intérieures (6.1, 6.2, 6.3, 6.4, 6.5, 6.6, 6.7, 6.8) forment des lignes de signaux électriques et les tiges de contact extérieures (7.1, 7.2, 7.3, 7.4) forment des lignes d'alimentation électriques.
